# EUROPEAN PATENT SPECIFICATION

(11) **EP 1 920 971 B1**
(45) Date of publication and mention of the grant of the patent: **04.03.2009**
(21) Application number: 07119989.7
(22) Date of filing: 05.11.2007
(51) Int. Cl.: B60Q 1/12, B60Q 11/00

(54) **Lighting control device and lighting control method**
Vorrichtung und Verfahren zur Beleuchtungssteuerung
Dispositif et procédé de contrôle de l'éclairage

(30) Priority: 10.11.2006 JP 2006304822
(43) Date of publication of application: 14.05.2008
(73) Proprietor: OMRON CORPORATION, Kyoto-shi, Kyoto 600-8530 (JP); MITSUBISHI JIDOSHA KOGYO KABUSHIKI KAISHA, Tokyo 108-8410 (JP)
(72) Inventor: Todani, Akinobu c/o Omron Corporation, Shiokoji-dori, Shimogyo-ku Kyoto-shi, Kyoto 600-8530 (JP); Uchiyama, Fumihito c/o Omron Corporation, Shiokoji-dori, Shimogyo-ku Kyoto-shi, Kyoto 600-8530 (JP); Shimpo, Toshiya c/o Mitsubishi Jidosha Kogyo Kabushiki Kaisha, Tokyo 108-8410 (JP); Shinohara, Satoshi c/o Mitsubishi Jidosha Kogyo Kabushiki Kaisha, Tokyo 108-8410 (JP)
(74) Representative: Wilhelms · Kilian & Partner Patentanwälte

(56) References cited:
- WO-A-20/05059501
- DE-B3-6102004 008 23
- US-A- 6 066 951
- US-A1- 2005 258 948
- US-A1- 2006 170 427

## Description

### BACKGROUND OF THE INVENTION

### 1. Field of the Invention

The present invention relates to a lighting control device and a lighting control method used to control an auxiliary headlamp that is illuminated by a steering wheel turning operation or a turn signal switch operation being performed while a vehicle is moving. In particular, the lighting control device and the lighting control method take into consideration daily inspection.

### 2. Description of the Related Art

Conventionally, a device that enhances safety in a following way is known. When a steering wheel angle is a constant value or more as a result of a steering wheel operation performed while a vehicle is moving (an adaptive front-lighting system [AFS] can only be operated when a predetermined turning radius is equal to or less than 500R) or when a turn signal switch is operated, the device judges that a user intends to make a turn. An auxiliary headlamp that is fixed onto and disposed diagonally in the front of the vehicle (fixed AFS) further illuminates the direction in which the vehicle is turning.

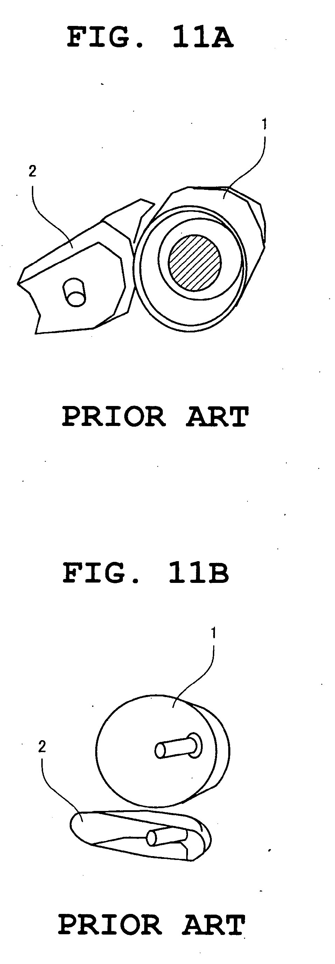

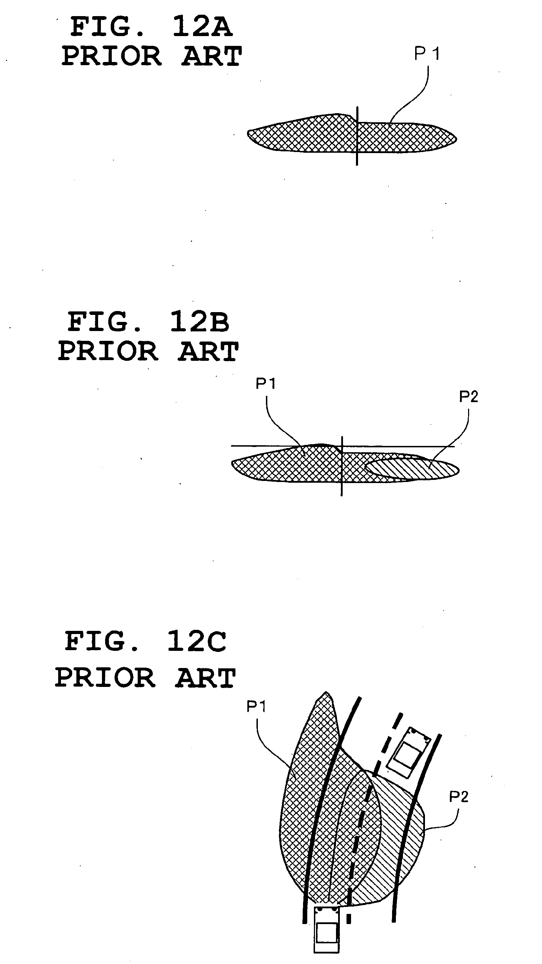

Here, FIG. 11A and FIG. 11B are schematic diagrams of configuration examples of a headlamp 1 and an auxiliary headlamp 2. FIG. 12A to FIG. 12C are schematic diagrams of radiating positions irradiated by the headlamp 1 and the auxiliary headlamp 2. As shown in FIG. 11A and FIG. 11B, a fixed auxiliary headlamp 2 is disposed near a fixed headlamp 1, diagonally in the front of the vehicle. In a normal state (when traveling straight), only the headlamp 1 is lit. A radiating position P1 is such as that shown in FIG. 12A. When the vehicle is traveling in a curve, the auxiliary headlamp 2 is illuminated in addition to the headlamp 1. A radiating position P2 is such as that shown in FIG. 12B. As a result, the direction in which the vehicle is turning is irradiated brightly as shown in FIG. 12C.

A following technology is proposed for controlling the illumination of the auxiliary headlamp 2 (for example, refer to JP 620 77 251). In the technology, for example, to prevent a view that is in front of a vehicle and visible to the driver of the vehicle from suddenly disappearing from the driver's view when the vehicle is traveling over a winding road, such as an off-road environment, a lighting means on the steering direction side can communicate with the steering wheel. The radiating direction of the lighting means on the steering direction side is variable. The radiating direction of a lighting means on the side counter to the steering direction is fixed

In Japan, based on technical standards prescribed in the ordinance of the Ministry of Land, Infrastructure, and Transport, which are laws of Japan, an automobile user is required to inspect the illumination of lighting devices, the operation of controlling devices, and other items requiring daily inspection by performing "visual inspection and the like", at a timing judged to be appropriate based on traveling distance, operation state, and the like of the automobile.

A regulation such as this is actualized based on the laws of each country, if such laws exist.

A following technology is proposed to facilitate an automobile inspection such as that described above (for example, refer to JP 9 328 045). For example, a plurality of lamps is automatically operated in sequence, based on an inspection instruction given by an inspector. As a result, the lamps are not required to be turned on and turned off by manual operation. The vehicle can be checked in a short amount of time.

As described regarding the conventional technology above (JP 620 77 251), the auxiliary headlamp 2 is controlled such that only the steering wheel angle serves as a condition under which the auxiliary headlamp 2 is illuminated when the shift lever position is set to drive (D). Therefore, the auxiliary headlamp 2 is required to be inspected while the automobile is moving.

However, in the above-described conventional technology (JP 9328045), the plurality of lamps is merely automatically operated in sequence. The auxiliary headlamp 2 that can only be inspected when the automobile is moving is not taken into consideration at all.

In this way, although it is preferable for a driver to inspect the auxiliary headlamp alone while the vehicle is stopped, the illumination control is required to be performed only when the vehicle is moving. Therefore, the inspection requires a plurality of people, such as an operator and a checker. Thus, the inspection cannot be easily performed.

US 2006/0170427 A discloses controlling means for cycling the vehicle lamps ON and OFF to allow a daily inspection by one person alone of the operability of the bulbs and comprising an ignition ON state detecting means and a stopped state detecting means.

### SUMMARY OF THE INVENTION

The present invention has been conceived in light of the foregoing situations, and is to provide a lighting control device and a lighting control method that can facilitate daily inspection of an auxiliary headlamp.

In order to achieve the above-described purpose, in accordance with one aspect of the present invention, there is provided a lighting control device controlling illumination of an auxiliary headlamp provided in a front of a vehicle and ordinarily illuminated only when the vehicle is moving and predetermined conditions are met, characterized by an ignition ON state detecting means for detecting at least an ignition switch provided in the vehicle being switched from an OFF state to an ON state; a time measuring means for measuring a predetermined amount of time when the ignition ON state detecting means detects that the ignition switch has switched from the OFF state to the ON state; a stopped state detecting means for detecting that the vehicle is in a stopped state; and a controlling means for permitting the illumination of the auxiliary headlamp when the stopped state detecting means detects that the vehicle is in the stopped state while the time measuring means is measuring the predetermined amount of time.

In accordance with another aspect of the present invention, there is provided a lighting control method of controlling illumination of an auxiliary headlamp provided in a front of a vehicle and ordinarily illuminated only when the vehicle is moving and predetermined conditions are met, characterized by an ignition ON state detecting step of detecting at least an ignition switch provided in the vehicle being switched from an OFF state to an ON state; a time measuring step of measuring a predetermined amount of time when the ignition switch is detected to have switched from the OFF state to the ON state; a stopped state detecting step of detecting that the vehicle is in a stopped state; and a controlling step of permitting the illumination of the auxiliary headlamp when the vehicle is detected to be in the stopped state while the predetermined amount of time is being measured.

According to the invention, illumination of the auxiliary headlamp provided in the front of the vehicle and ordinarily illuminated only when the vehicle is moving and predetermined conditions are met can be controlled when the vehicle is stopped. Thus, daily inspections can be facilitated.

The above and further objects and novel features of the present invention will more fully appear from the following detailed description when the same is read in conjunction with the accompanying drawings. It is to be expressly understood, however, that the drawings are for the purpose of illustration only and are not intended as a definition of the limits of the invention.

### BRIEF DESCRIPTION OF THE DRAWINGS

FIG. 1 is a block diagram of a configuration of an auxiliary headlamp controlling device according to a first embodiment of the present invention;
FIG. 2 is a flowchart explaining an operation performed by the auxiliary headlamp controlling device according to the first embodiment;
FIG. 3 is a schematic diagram of a first operation example according to the first embodiment;
FIG. 4 is a schematic diagram of a second operation example according to the first embodiment;
FIG. 5 is a schematic diagram of a third operation example according to the first embodiment;
FIG. 6 is a schematic diagram of a fourth operation example according to the first embodiment;
FIG. 7 is a block diagram of a configuration of an auxiliary headlamp controlling device according to a second embodiment of the present invention;
FIG. 8 is a flowchart explaining an operation performed by the auxiliary headlamp controlling device according to the second embodiment;
FIG. 9 is a schematic diagram of a first operation example according to the second embodiment;
FIG. 10 is a schematic diagram of a second operation example according to the second embodiment;
FIG. 11A is a diagram of a configuration example of a headlamp 1 and an auxiliary headlamp 2 in conventional prior art;
FIG. 11B is a diagram of a configuration example of the headlamp 1 and the auxiliary headlamp 2 in conventional prior art;
FIG. 12A is a diagram of radiating positions of the headlamp 1 and the auxiliary headlamp 2 in conventional prior art;
FIG. 12B is a diagram of the radiating positions of the headlamp 1 and the auxiliary headlamp 2 in conventional prior art; and
FIG. 12C is a diagram of the radiating positions of the headlamp 1 and the auxiliary headlamp 2 in conventional prior art.

### DETAILED DESCRIPTION OF THE PREFERRED EMBODIMENTS

An example of the present invention will hereinafter be described in detail with reference to the preferred embodiments shown in the accompanying drawings

### A. First Embodiment

### A-1. Configuration according to the First Embodiment

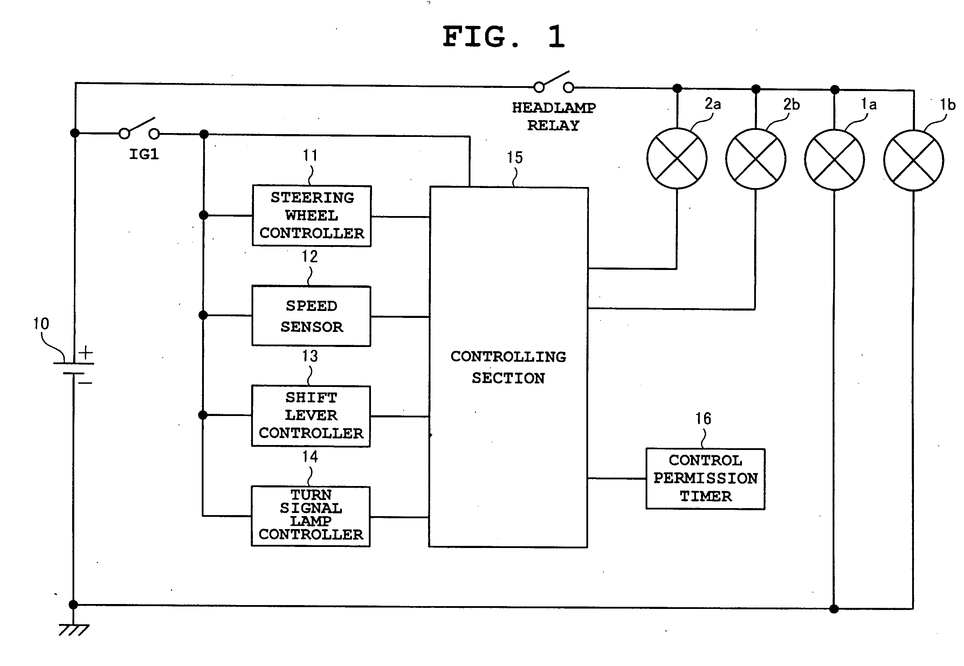

FIG. 1 is a block diagram of a configuration of an auxiliary headlamp controlling device (lighting control device) according to a first embodiment of the present invention. The first embodiment is an example in which the present invention is applied to a vehicle having automatic transmission (AT).

In FIG. 1, when an ignition switch IG 1 is turned ON, a battery 10 supplies power to each component. A steering wheel controller 11 provides a controlling section 15 with steering wheel angle information indicating a steering wheel angle. A speed sensor 12 provides the controlling section 15 with speed information indicating the speed of the vehicle.

A shift lever controller 13 provides the controlling section 15 with position information indicating a position of a shift lever, or in other words, a shift lever position (park [P], reverse [R], neutral [N], drive [D], and the like). A turn signal lamp controller 14 provides the controlling section 15 with turn information for controlling blinking of a direction indicator lamp (turn signal lamp) when a vehicle is making a left turn or a right turn.

The controlling section 15 allows a daily inspection to be performed on an auxiliary headlamp 2a and an auxiliary headlamp 2b when the shift lever position is P and a speed that is a constant value or more is not detected (the speed is "0") after the ignition switch IG 1 is turned ON, based on the speed information and the position information. In other words, the controlling section 15 can allow the ON and OFF of the auxiliary headlamp 2a and the auxiliary headlamp 2b to be controlled by manual operation. As a result, the inspection can be performed when the vehicle is stopped. The auxiliary headlamp 2a and the auxiliary headlamp 2b are set in the front of the vehicle, and-ordinarily only illuminated when predetermined conditions are met while the vehicle is moving. The auxiliary headlamp 2a and the auxiliary headlamp 2b are respectively disposed in correspondence with a headlamp 1a and a headlamp 1b.

However, under a premise that an abnormality occurs during signal input, the controlling section 15 prohibits the daily inspection of the auxiliary headlamp when a predetermined amount of time passes after the ignition switch IG 1 is turned ON without the above-described conditions being met. According to the first embodiment, a control permission timer (decrement counter) 16 is provided to measure the elapse of a constant amount of time after the ignition switch IG 1 is turned ON.

Daily inspection control refers to control performed such that a pre-boarding inspection can be performed by predetermined conditions being met, to allow a pre-boarding inspection of vehicle lamps (the auxiliary headlamp 2a and the auxiliary headlamp 2b) prescribed by law to be performed. The vehicle lamps ordinarily cannot be illuminated while the vehicle is stopped. More specifically, according to the first embodiment, the daily inspection control is permitted under the conditions that the shift lever position is P and a speed that is the constant value or more is not detected within a predetermined amount of time, measured by the control permission timer 16, after the ignition switch IG 1 is switched from OFF to ON. When the daily inspection control is permitted, the user steers the steering wheel to a steering wheel angle that is a constant angle or more. The user illuminates the auxiliary headlamp 2a and the auxiliary headlamp 2b and visually confirms the illumination of the auxiliary headlamp 2a and the auxiliary headlamp 2b while the automobile is stopped.

The predetermined amount of time is set to prevent erroneous operations, under a premise that an abnormality occurs during signal input. Prevention of unnecessary lamp illumination (prevention of the user forgetting to turn off the lamps when the engine is stopped) and prevention of batteries running low while the engine is stopped as a result of the operation being performed when the ignition switch IG 1 is turned ON are taken into consideration. Furthermore, the condition regarding speed is added in consideration of prevention of erosion of the auxiliary headlamp 2a and the auxiliary headlamp 2b and of inconvenience caused by the lamps being turned on and off while the automobile is running.

The speed sensor 12 functions as a speed detecting means. The shift lever controller 13 functions as a stopped state detecting means and a shift lever position detecting means. The control permission timer 16 functions as a time measuring means. The controlling section 15 functions as an ignition switch ON state detecting means and a controlling means.

### A-2. Operations according to the First Embodiment

Next, operations performed according to the first embodiment will be described.

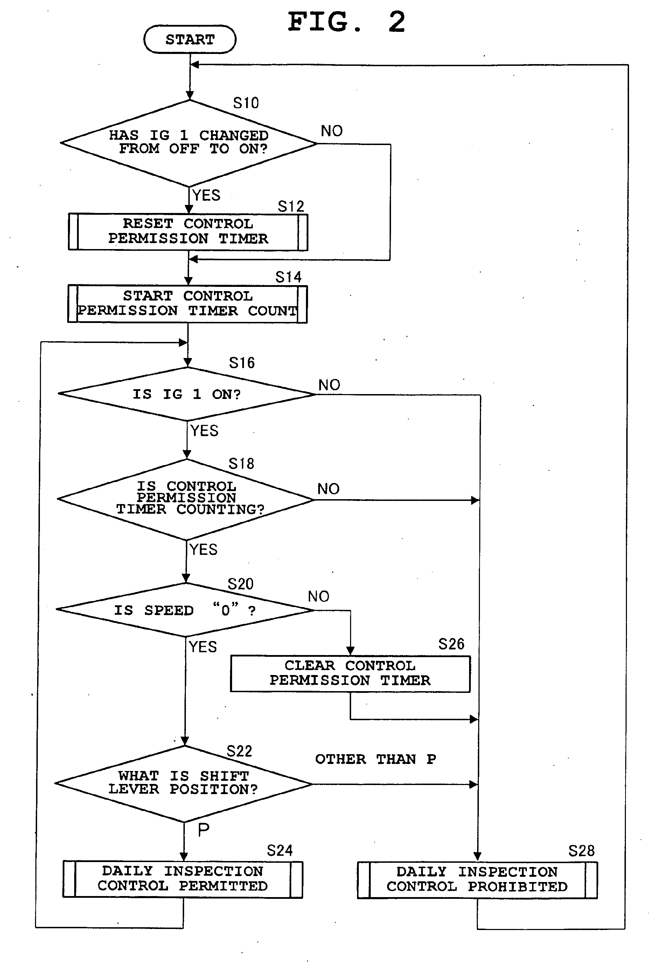

FIG. 2 is a flowchart explaining an operation performed by the auxiliary headlamp controlling device according to the first embodiment. First, the controlling section 15 judges whether the ignition switch IG 1 has changed from OFF to ON (Step S10). When the ignition switch IG 1 changes from OFF to ON, the control permission timer (decrement timer) 16 is reset (Step S12) and starts counting (Step S14). At the same time, when the ignition switch IG 1 does not change from OFF to ON, the control permission timer 16 starts counting without being reset (Step S14).

Next, the controlling section 15 judges whether the ignition switch IG 1 is turned ON (Step S16). When the ignition switch IG 1 is turned ON, the controlling section 15 judges whether the control permission timer 16 is counting (Step S18). When the control permission timer 16 is counting, the controlling section 15 judges whether the speed is "0" based on the speed information from the speed sensor 12 (Step S20). When the speed is "0" , the controlling section 15 judges whether the shift lever position is P or a position other than P based on the position information from the shift lever controller 13 (Step S22). Here, when the shift lever position is P, the controlling section 15 permits the daily inspection control (Step S24).

At the same time, when the ignition switch IG 1 is not turned ON, or when the ignition switch IG 1 is turned ON but the control permission timer 16 is not counting or, in other words, when the predetermined amount of time has passed, the controlling section 15 prohibits the daily inspection control (Step S28). Then, the controlling section 15 returns to Step S10 and repeats the above-described process.

When the ignition switch IG 1 is turned ON and the control permission timer 16 is counting but the speed is not "0", the controlling section 15 clears the control permission timer 16 (Step S22), and prohibits the daily inspection control (Step S28). Then, the controlling section 15 returns to Step S10 and repeats the above-described process. In this case, because the control permission timer 16 has been cleared, the control permission timer 16 does not start counting unless the ignition switch IG 1 is switched from OFF to ON. Therefore, the daily inspection control remains prohibited.

Even when the ignition switch IG 1 is turned ON, the control permission timer 16 is counting, and the speed is "0", when the shift lever position is a position other than P, the controlling section 15 prohibits the daily inspection control (Step S28) . Then, the controlling section 15 returns to Step S10 and repeats the above-described process. In this case, the control permission timer 16 is not cleared. Therefore, the daily inspection control is permitted if the shift lever position is returned to P while the control permission timer 16 is counting.

In other words, the controlling section 15 permits the daily inspection control when the speed is "0" and the shift lever position is P while the control permission timer 16 is counting (within the predetermined period of time) after the ignition switch IG 1 is turned ON. At the same time, the controlling section 15 prohibits the daily inspection control when the control permission timer 16 is not counting (when the predetermined period of time has passed) after the ignition switch IG 1 is turned ON, when the speed is not "0" , or when the shift lever position is not P.

Next, specific examples of how the daily inspection control is permitted and prohibited according to various embodiments of the vehicle will be described.

### (1) First Operation Example

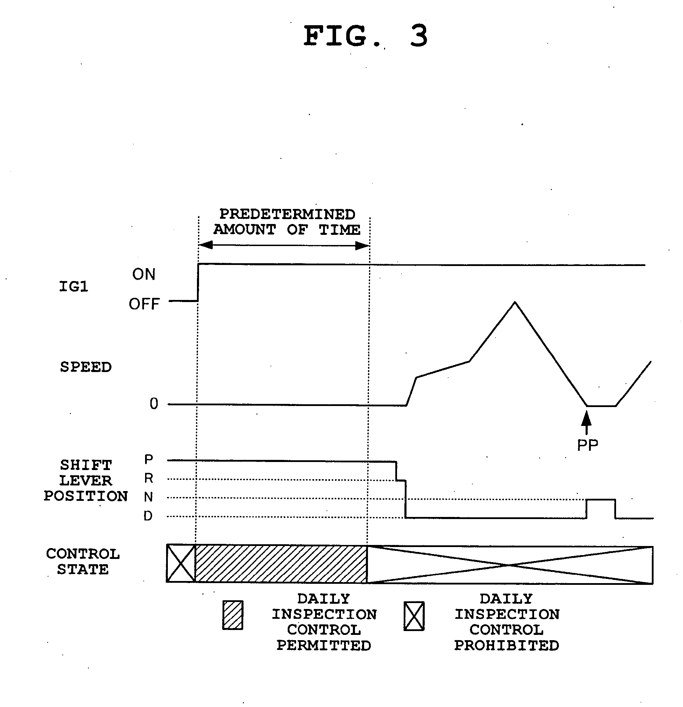

FIG. 3 is a schematic diagram of a first operation example according to the first embodiment. In the diagram, the daily inspection control is permitted (section indicated by diagonal lines) when the speed is a motion-determining speed (the speed is "0" according to the embodiment) or less and the shift lever position is P while the control permission timer 16 is counting (within the predetermined amount of time) after the ignition switch IG 1 is turned ON. At the same time, the daily inspection control is prohibited (section indicated by X) when the ignition switch IG 1 is turned OFF or when the control permission timer 16 is not counting (when the predetermined amount of time has passed).

### (2) Second Operation Example

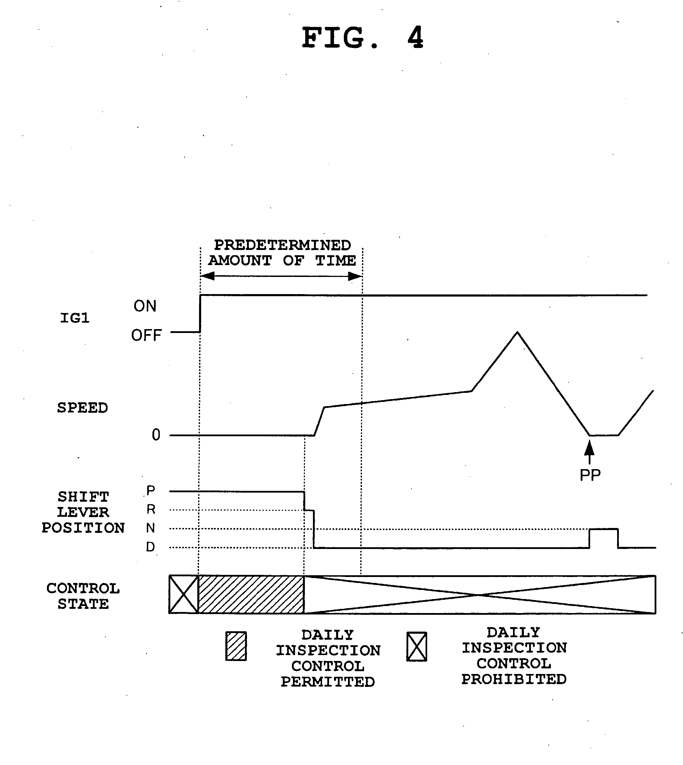

FIG. 4 is a schematic diagram of a second operation example according to the first embodiment. In the diagram, the daily inspection control is permitted (section indicated by diagonal lines) when the speed is the motion-determining speed (the speed is "0" according to the embodiment) or less and the shift lever position is P while the control permission timer 16 is counting (within the predetermined amount of time) after the ignition switch IG 1 is turned ON, as described above. At the same time, the daily inspection control is prohibited (section indicated by X) when the ignition switch IG 1 is turned OFF. The daily inspection control is also prohibited (section indicated by X) even while the control permission timer 16 is counting (within a predetermined amount of time), if the shift lever position is a position other than P or the speed exceeds the motion-determining speed (in this case, the speed is "0") .

### (3) Third Operation Example

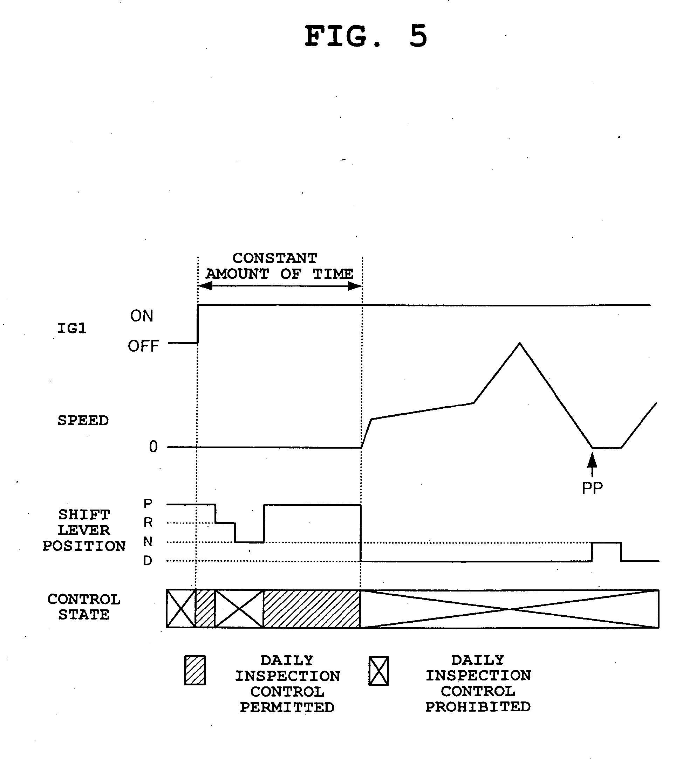

FIG. 5 is a schematic diagram of a third operation example according to the first embodiment. In the diagram, as according to the first specific example, the daily inspection control is permitted (section indicated by diagonal lines) when the speed is the motion-determining speed (the speed is "0" according to the embodiment) or less and the shift lever position is P while the control permission timer 16 is counting (within the predetermined amount of time) after the ignition switch IG 1 is turned ON. However, the daily inspection control is prohibited (section indicated by X) when the shift lever position becomes a position other than P while the control permission timer 16 is counting (within the predetermined amount of time). Then, the daily inspection control is permitted (section indicated by diagonal lines) when the shift lever position is once again returned to P while the control permission timer 16 is counting. As described above, the daily inspection control is prohibited (section indicated by X) when the control permission timer 16 is not counting (when the predetermined amount of time has passed).

### (4) Fourth Operation Example

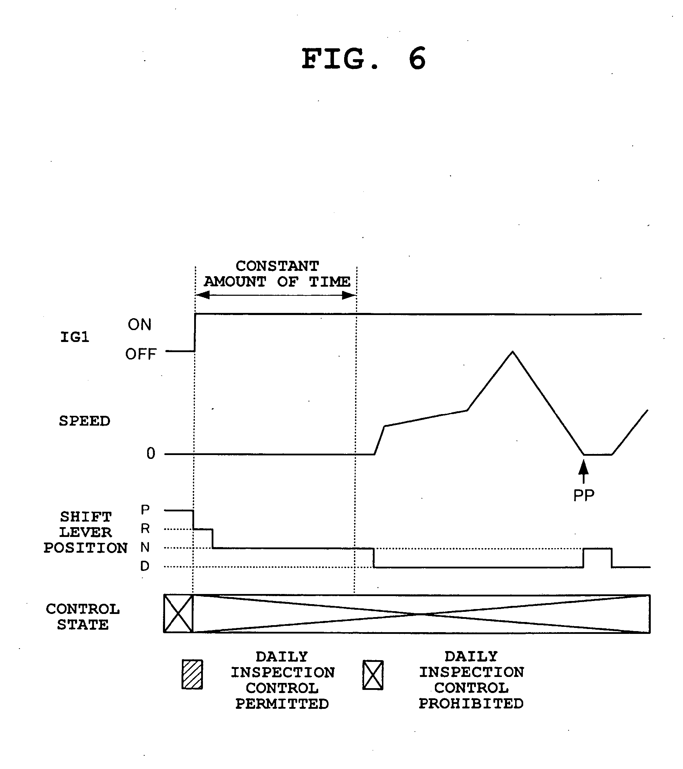

FIG. 6 is a schematic diagram of a fourth operation example according to the first embodiment. In the diagram, the daily inspection control is prohibited even while the control permission timer 16 is counting after the ignition switch IG 1 is turned ON, if the shift lever position is a position other than P. In the example shown in the diagram, the shift lever position does not become P (remains at N) while the control permission timer 16 is counting. Therefore, the daily inspection control is not permitted and remains prohibited.

In all specific examples, once the speed exceeds the motion-determining speed, the daily inspection control is prohibited until the ignition switch IG 1 is again switched from OFF to ON. In other words, after the speed exceeds the motion-determining speed (in this case, the speed is "0"), the daily inspection control remains prohibited even when the speed becomes the motion-determining speed value (in this case, the speed is "0") or less or the shift lever position is returned to P (PP indicated by the arrow ↑ in FIG. 3 to FIG. 6) before the ignition switch IG 1 is again switched from OFF to ON.

### B. Second Embodiment

### B-1. Configuration according to the Second Embodiment

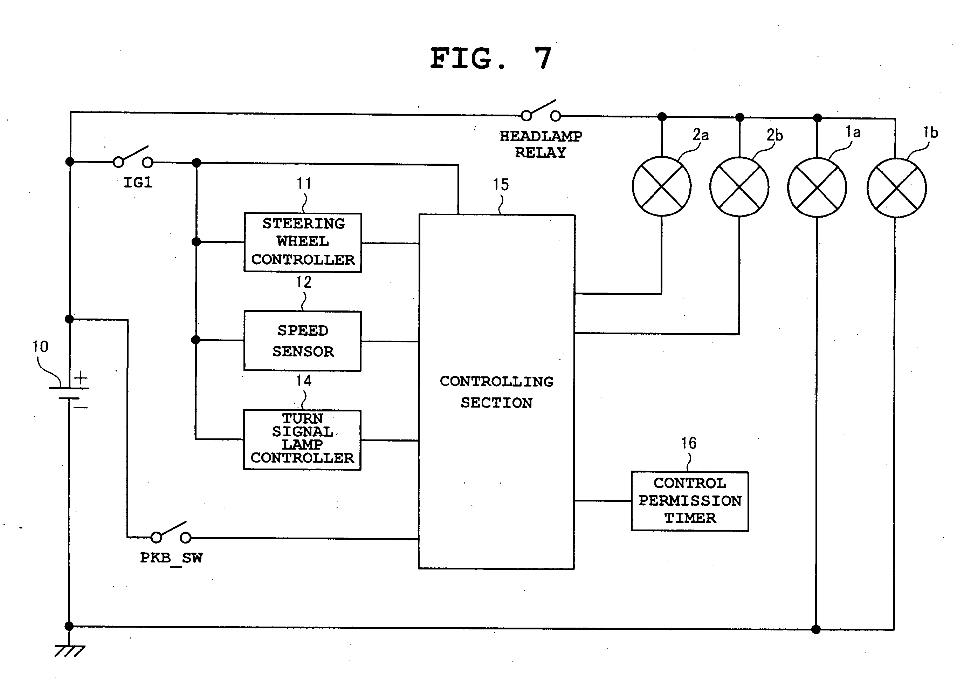

FIG. 7 is a block diagram of a configuration of an auxiliary headlamp controlling device according to a second embodiment of the present invention. Sections corresponding to those in the first embodiment are given the same reference numbers. Thus, explanations thereof are omitted. The second embodiment is an example in which the present invention is applied to a vehicle having manual transmission (MT) . In FIG. 7, a parking brake switch PKB_SW (equivalent to a shift lever position detecting means) is turned ON when a parking brake is pulled and turned OFF when the parking brake is released.

The controlling section 15 controls permission and prohibition of the daily inspection control using the ignition switch IG 1, information from the speed sensor 12, and the state of the parking brake switch PKB_SW as the conditions. More specifically, the controlling section 15 permits the daily inspection control under the conditions that the parking brake is ON and a speed that is a constant speed or more is not detected within a predetermined amount of time measured by the control permission timer 16 after the ignition switch IG 1 is switched from OFF to ON.

### B-2. Operations according to the Second Embodiment

Next, operations according to the above-described second embodiment are described.

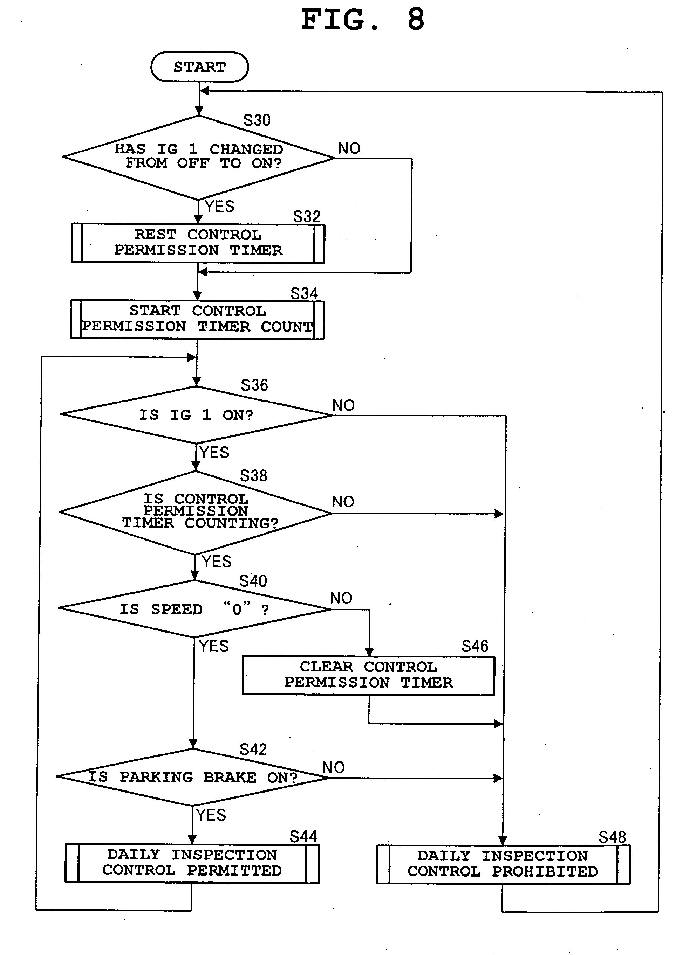

FIG. 8 is a flowchart explaining an operation performed by the auxiliary headlamp control device according to the second embodiment. In the diagram, Step S30 to Step S48 are equivalent to the above-described Step S10 to Step S28 according to the first embodiment, shown in FIG. 2. Thus, explanations thereof are omitted, and only points that differ will be described. According to the second embodiment, at Step S42, the controlling section 15 judges whether the parking brake is ON based on the state of the parking brake switch PKB_SW.

In other words, according to the second embodiment, the controlling section 15 permits the daily inspection control when the speed is "0" and the parking brake is ON while the control permission timer 16 is counting (within the predetermined time) after the ignition switch IG 1 is turned ON. At the same time, the controlling section 15 prohibits the daily inspection control when the control permission timer 16 is not counting (when the predetermined period of time has passed) after the ignition switch IG 1 is turned ON, when the speed is not "0", or when the parking brake is not ON.

Next, specific examples of how the daily inspection control is permitted and prohibited according to various embodiments of the vehicle will be described.

### (1) First Operation Example

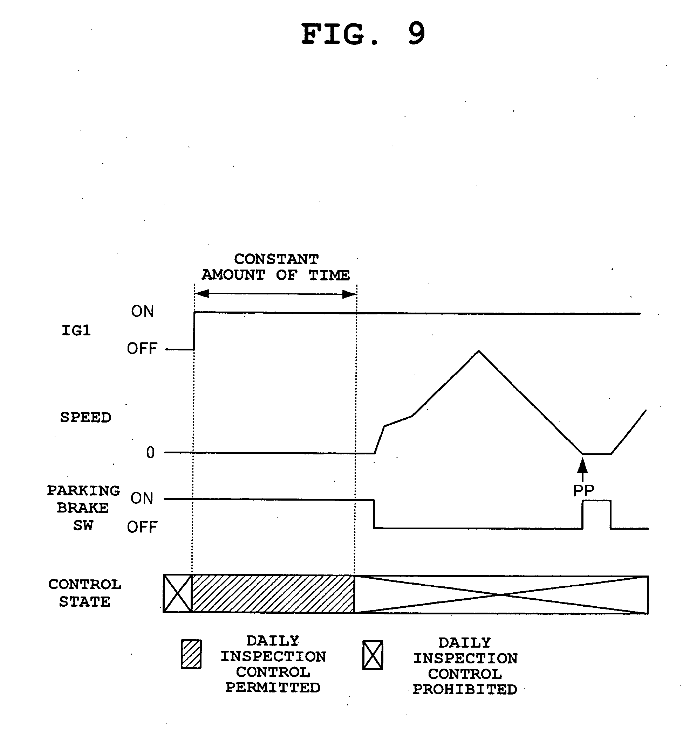

FIG. 9 is a schematic diagram of a first operation example according to the second embodiment. In the diagram, the daily inspection control is permitted (section indicated by diagonal lines) when the speed is the motion-determining speed (the speed is "0" according to the embodiment) or less and the parking brake is ON while the control permission timer 16 is counting (within the predetermined amount of time) after the ignition switch IG 1 is turned ON. At the same time, the daily inspection control is prohibited (section indicated by X) when the ignition switch IG 1 is turned OFF or when the control permission timer 16 is not counting (when the predetermined amount of time has passed).

### (2) Second Operation Example (MT)

FIG, 10 is a schematic diagram of a second operation example according to the second embodiment. In the diagram, the daily inspection control is permitted (section indicated by diagonal lines) when the speed is the motion-determining speed (the speed is "0" according to the embodiment) or less and the parking brake is ON while the control permission timer 16 is counting (within the predetermined amount of time) after the ignition switch IG 1 is turned ON, as described above. At the same time, the daily inspection control is prohibited (section indicated by X) when the ignition switch IG 1 is turned OFF. The daily inspection control is also prohibited (section indicated by X) even while the control permission timer 16 is counting (within a predetermined amount of time), if the parking brake is OFF or the speed exceeds the motion-determining speed (in this case, the speed is "0").

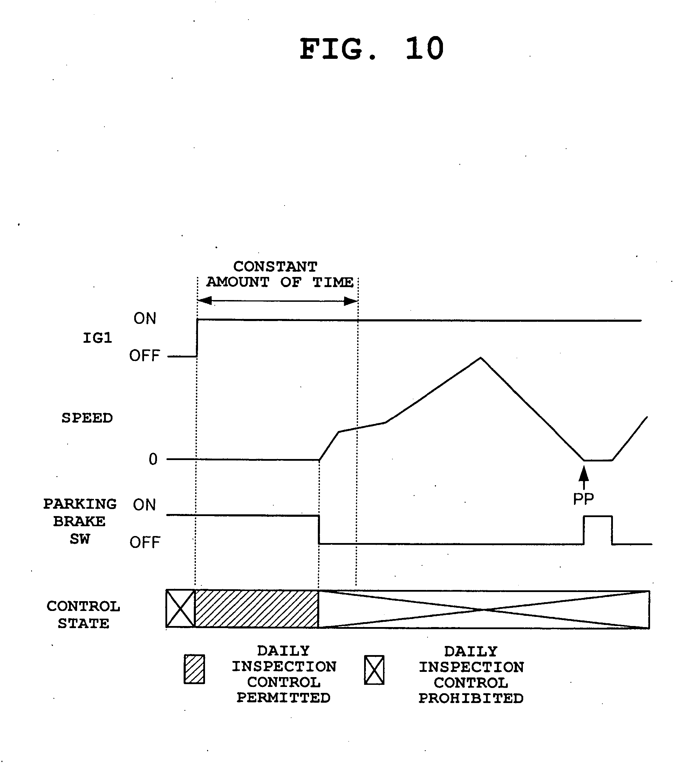

As according to the first embodiment, in all specific examples, once the speed exceeds the motion-determining speed, the daily inspection control is prohibited until the ignition switch IG 1 is again switched from OFF to ON. In other words, after the speed exceeds the motion-determining speed (in this case, the speed is "0"), the daily inspection control remains prohibited even when the speed becomes the motion-determining speed value (in this case, the speed is "0") or less or the parking brake is turned ON (PP indicated by the arrow ↑ in FIG. 9 and FIG. 10) before the ignition switch IG 1 is again switched from OFF to ON.

## Claims

1. A lighting control device controlling illumination of an auxiliary headlamp (2a and 2b) provided in a front of a vehicle and ordinarily illuminated only when the vehicle is moving and predetermined conditions are met, comprising :
- an ignition ON state detecting means (15) for detecting at least an ignition switch (IG1) provided in the vehicle being switched from an OFF state to an ON state; and
- a stopped state detecting means (13) for detecting that the vehicle is in a stopped state;
**characterized by** further comprising:
a time measuring means (16) for measuring a predetermined amount of time when the ignition ON state detecting means detects that the ignition switch has switched from the OFF state to the ON state; and
a controlling means (15) for permitting the illumination of the auxiliary headlamp when the stopped state detecting means detects that the vehicle is in the stopped state while the time measuring means is measuring the predetermined amount of time.

2. The lighting control device according to claim 1, wherein the stopped-state detecting means (13) includes a speed detecting means (12) for detecting a speed of the vehicle and detects that the vehicle is in the stopped-state when the speed detecting means detects that the speed is a motion-determining speed or less.

3. The lighting control device according to claim 2, wherein the stopped-state detecting means (13) includes a shift lever position detecting means (13 and PKB_SW) for detecting a shift lever position of a shift lever of a transmission in the vehicle and detects that the vehicle is in the stopped state when the shift lever position detecting means detects that the shift lever is positioned at park.

4. A lighting control method of controlling illumination of an auxiliary headlamp (2a and 2b) provided in a front of a vehicle and ordinarily illuminated only when the vehicle is moving and predetermined conditions are met, comprising:
- an ignition ON state detecting step (S10, S30) of detecting at least an ignition switch (IG 1) provided in the vehicle being switched from an OFF state to an ON state; and
- a stopped state detecting step (S20 and S40) of detecting that the vehicle is in a stopped state;
**characterized by** further comprising:
a time measuring step (S14, S18, S26, S34, S38, and S46) of measuring a predetermined amount of time when the ignition switch (IG 1) is detected to have switched from the OFF state to the ON state; and
a controlling step (S24 and S44) of permitting the illumination of the auxiliary headlamp when the vehicle is detected to be in the stopped state while the predetermined amount of time is being measured.

## Patentansprüche

1. Aufleuchtungssteuervorrichtung zur Steuerung des Leuchtens eines Hilfsscheinwerfers (2a und 2b), der vor einem Fahrzeug vorgesehen ist und gewöhnlich nur leuchtet, wenn sich das Fahrzeug bewegt und bestimmte Bedingungen erfüllt sind, wobei die Vorrichtung aufweist:
Zündung-EIN-Zustands-Feststellungsmittel (15) zur Feststellung, dass wenigstens ein im Fahrzeug vorgesehener Zündstalter (IG 1) aus einem AUS-Zustand in einen EIN-Zustand geschaltet wird; und
Haltzustands-Feststellungsmittel (13) zur Feststellung, dass sich das Fahrzeug in einem Haltezustand befindet,
**dadurch gekennzeichnet, dass** sie ferner aufweiset:
Zeitmessmittel (16) zur Messung einer bestimmten Zeitdauer, wenn die Zündung-EIN-Zustands-Feststellungsmittel feststeller, dass der Zündschalter aus dem AUS-Zustand in den EIN-Zustand geschaltet hat; und
Steuermittel (15) zum Zulassen des Leuchtens des Hilfsscheinwerfers, während die Zeitmessmittel die bestimmte Zeitdauer messen, wenn die Haltzustands-Feststellungsmittel feststellen, dass sich das Fahrzeug im Haltzustand befindet.

2. Aufleuchtsteuervorrichtung nach Anspruch 1, wobei die Haltzustands-Feststellungsmittel (13) Geschwindigkeitsfeststellungsmittel (12) zur Feststellung einer Geschwindigkeit des Fahrzeugs entfalten und feststellen, dass sich das Fahrzeug im Haltzustand befindet, wenn die Geschwindigkeitsfeststellungsmittel feststellen, dass die Geschwindigkeit eine bewegungsbestimmende Geschwindigkeit oder weniger ist.

3. Aufleuchtsteuervorrichtung nach Anspruch 2, wobei die Haltzustands-Feststellungsmittel Schalthebelpositionsfeststellungsmittel (13 und PKB_SW) zur Feststellung einer Schalthebelposition eines Schalthebels eines Getriebes in dem Fahrzeug enthalten und feststellen, dass sich das Fahrzeug im Haltezustand befindet, wenn die Schalthebelpositionsfeststellungsmittel feststellen, dass sich der Schalthebel in Park-Position befindet.

4. Aufleuchtsteuerverfahren zur Steuerung des Leuchtens eines Hilfsscheinwerfers (2a und 2b), der vor einem Fahrzeug vorgesehen ist und gewöhnlich nur leuchtet, wenn sich das Fahrzeug bewegt und bestimmte Bedingungen erfüllt sind, wobei das Verfahren aufweist:
einen Zündung-EIN-Zustand-Feststellungsschritt (S10, S30) zur Feststellung, dass wenigstens ein im Fahrzeug vorgesehener Zündstalter (IG 1) aus einem AUS-Zustand in einen EIN-Zustand geschaltet wird; und
einen Haltzustands-Feststellungsschritt (S20 und S40) zur Feststellung, dass sich das Fahrzeug in einem Haltzustand befindet,
**dadurch gekennzeichnet, dass** es ferner aufweist:
einen Zeitmessschritt (S14, S18, S26, S34, S38 und S46) zur Messung einer bestimmten Zeitdauer, wenn festgestellt wird, dass der Zündschalter (IG 1) aus dem AUS-Zustand in den EIN-Zustand geschaltet hat; und
einen Steuerschritt (S24 und S44) der Zulassung des Leuchtens des Hilfsscheinwerfers, während die bestimmte Zeitdauer gemessen wird, wenn festgestellt wird, dass sich das Fahrzeug in dem Haltzustand befindet.

## Revendications

1. Dispositif de contrôle d'éclairage pour contrôler l'éclairage d'un phare auxiliaire (2a et 2b) prévu dans une partie avant d'un véhicule et normalement éclairé uniquement lorsque le véhicule se déplace et que des conditions prédéterminées sont satisfaites, comprenant :
• des moyens de détection d'état de marche d'allumage (15) pour détecter au moins un commutateur d'allumage (IG1) prévu dans le véhicule qui passe d'un état d'arrêt à un état de marche ; et
• des moyens de détection d'état d'arrêt (13) pour détecter que le véhicule est dans un état arrêté ;
• **caractérisé en ce qu'**il comprend en outre :
• des moyens de mesure de temps (16) pour mesurer une quantité de temps prédéterminée lorsque les moyens de détection d'état de marche d'allumage détectent que le commutateur d'allumage est passé de l'état d'arrêt à l'état de marche ; et
• des moyens de commande (15) pour permettre l'éclairage du phare auxiliaire lorsque les moyens de détection d'état arrêté détectent que le véhicule est à l'état arrêté alors que les moyens de mesure de temps mesurent la quantité de temps prédéterminée,

2. Dispositif de contrôle d'éclairage selon la revendication 1, dans lequel les moyens de détection d'état arrêté (13) comprennent des moyens de détection de vitesse (12) pour détecter une vitesse du véhicule et détectent que le véhicule est à l'état arrêté lorsque les moyens de détection de vitesse détectent que la vitesse est une vitesse de détermination de mouvement ou moins.

3. Dispositif de contrôle d'éclairage selon la revendication 2, dans lequel les moyens de détection d'état arrêté (13) comprennent des moyens de détection de position de levier de vitesse (13 et PKB_SW) pour détecter une position de levier de vitesse d'un levier de vitesse d'une transmission dans le véhicule et détectent que le véhicule est à l'état arrêté lorsque les moyens de détection de position de levier de vitesse détectent que le levier de vitesse est positionné dans la position de stationnement.

4. Procédé de contrôle d'éclairage pour contrôler l'éclairage d'un phare auxiliaire (2a et 2b) prévu dans une partie avant d'un véhicule est normalement éclaire uniquement lorsque le véhicule se déplace et que des conditions prédéterminées sont satisfaites, comprenant :
• une étape de détection d'état de marche d'allumage (S10, S30) consistant à détecter au moins un commutateur d'allumage (IG1) prévu dans le véhicule qui passe d'un état d'arrêt à un état de marche ;
* une étape de détection d'état arrêté (S20 et S40) consistant à détecter que le véhicule est dans un état arrêté ;
* **caractérisé en ce qu'**il comprend en outre :
* une étape de mesure de temps (S14, S18, S26, S34, S38 et S46) consistant à mesurer une quantité de temps prédéterminée lorsque l'on détecte que le commutateur d'allumage (IG 1) est passé de l'état d'arrêt à l'état de marche : et
* une étape de commande (S24 et S44) consistant à permettre l'éclairage du phare auxiliaire lorsque l'on détecte que le véhicule est à l'état arrêté alors que la quantité de temps prédéterminée est mesurée.
